# EUROPEAN PATENT APPLICATION

(11) **EP 1 923 594 A2**
(43) Date of publication of application: **21.05.2008**
(21) Application number: 07380096.3
(22) Date of filing: 11.04.2007
(51) Int. Cl.: F16F 9/02

(54) **Adjustable stroke gas spring**

(30) Priority: 15.11.2006 ES 200602463 U
(71) Applicant: Seat, S.A., 08760 Martorell (ES)
(72) Inventor: Renato Ortiz, Juan, 08760 Martorell (ES); Mesa Medina, Santiago, 08760 Martorell (ES); Peña Blesa, Eduardo, 08760 Martorell (ES)
(74) Representative: Carvajal y Urquijo, Isabel

(57) **Abstract**

The invention relates to an adjustable stroke gas spring, formed by a tight cylindrical chamber (1), in which there is housed a piston, the stem (2) of which projects coaxially through one of the bases of the chamber. The spring comprises a cylindrical sheath (3) arranged and fixed around the wall of the chamber, a guide (4) assembled transversely on said sheath, with the ability of sliding and anchoring therealong, and a locking rod (5) parallel to the stem, which rod is assembled is assembled between the free end of said stem and the guide, with the ability of sliding with respect to said guide. The cylindrical sheath and guide have releasable mutual anchoring means along at least one section of the sheath for fixing the guide on the sheath in the selected position. The rod is fixed at one end to the end of the stem and at the opposite end it is finished in a stop located outside the guide preventing the separation of said guide.

## Description

### Field of the Invention

The present invention relates to an adjustable stroke gas spring which is formed by a tight cylindrical chamber, the corresponding stem projecting axially through one of the bases of such chamber, the free base of the chamber and the outer end of the stem having connecting means for the connection to the elements to be linked.

Springs of the type set forth are used, for example as a means for controlling the opening and closing of the trunk hatch or rear door of automotive vehicles.

### Background of the Invention

The springs of the type set forth are mainly based on the accumulation of a gas in a cylindrical chamber and its operation is due to the compression and expansion of this gas by means of a plunger joined to a stem projecting coaxially through one of the bases of the chamber.

The run of this type of springs, i.e. the validation between the maximum and minimum expansion positions, is constant.

The rear door or hatch of the vehicle generally has two of these gas springs assembled therein to control its opening. Since the run of the springs is fixed, the door always reaches a constant maximum opening position defined by the total run of the springs when it is opened, it being possible that this maximum opening position is high for the driver, making it difficult for the latter to reach it at the time of closing it.

### Description of the Invention

The object of the present invention is to solve the problem set forth by means of a gas cylinder of the type indicated, but provided with means allowing to adjust its run with memory or in other words, the expansion of the gas spring, whereby the degree of opening of the door or hatch can be adjusted, with the possibility of changing it at any time.

To that end, the gas spring of the invention is characterized by comprising a cylindrical sheath arranged around the wall of the chamber, a guide assembled transversely on said sheath, with the ability of sliding and anchoring therealong, and a locking rod parallel to the stem, which rod is assembled between the end of said stem, to which it is fixed, and the guide, with the ability of sliding with respect to said guide.

The sheath and guide have releasable mutual anchoring means, by means of which said guide can be fixed on the sheath along at least one section thereof, in the desired position.

The rod is fixed at one end to the end stem, whereas at the other end it is finished in a stop or head which is located outside the guide and which will prevent the separation of said guide.

The locking means between the guide and the sheath are formed by respective complementary opposite transverse toothings extending by an amplitude equal to or less than 180° both in the guide and in the sheath. The guide can move partially in a transverse direction with respect to the sheath between an engaging position, in which the toothings of guide and sheath are coupled to one another, and a releasing or non-engaging position, in which the toothings of both components are separated, without any coupling therebetween. The guide is constantly driven towards the engaging or coupling position with the sheath by means of a spring. The mentioned guide consists of a hub which is assembled on the cylindrical sheath, with the ability of sliding therealong, and of a yoke assembled externally on the hub. The inner surface of the hub has the toothing which will engage with the toothing of the sheath. The hub can further move with respect to the sheath and yoke in a direction perpendicular to the axis of the cylindrical chamber by a magnitude that is greater than the height of the teeth, for the purpose of being able to reach the aforementioned engaging and disengaging positions.

The yoke of the guide has a borehole parallel to the axis of the spring, through which the rod is assembled or passes with the ability of sliding therealong. The yoke further houses a spring which is assembled between it and the hub and drives said hub towards the engaging position.

### Brief Description of the Drawings

The constitution, features and operation of the spring of the invention are explained below with greater detail with reference to the attached drawings, which show a non-limiting embodiment.

In the drawings:
Figure 1 shows a side elevational view of a spring formed according to the invention.
Figure 2 shows a cross-sectional view of the spring, taken according to section line II - II, of Figure 1, with the guide in the engaging position.
Figure 3 shows a view similar to Figure 2, with the guide in the disengaging position.
Figure 4 shows a schematic longitudinal sectional view of the spring, in the maximum expansion position, taken according to section line IV - IV of Figure 1.
Figure 5 corresponds to detail A of Figure 4, on a larger scale, with the guide in the engaging position.
Figure 6 shows a view similar to Figure 5 with the guide in the disengaging position.
Figure 7 shows a view similar to Figure 4, with the maximum run of the spring partially limited.
Figure 8 shows the rear of a vehicle with the trunk hatch open, showing two maximum degrees of opening, fixed with the spring of the invention.

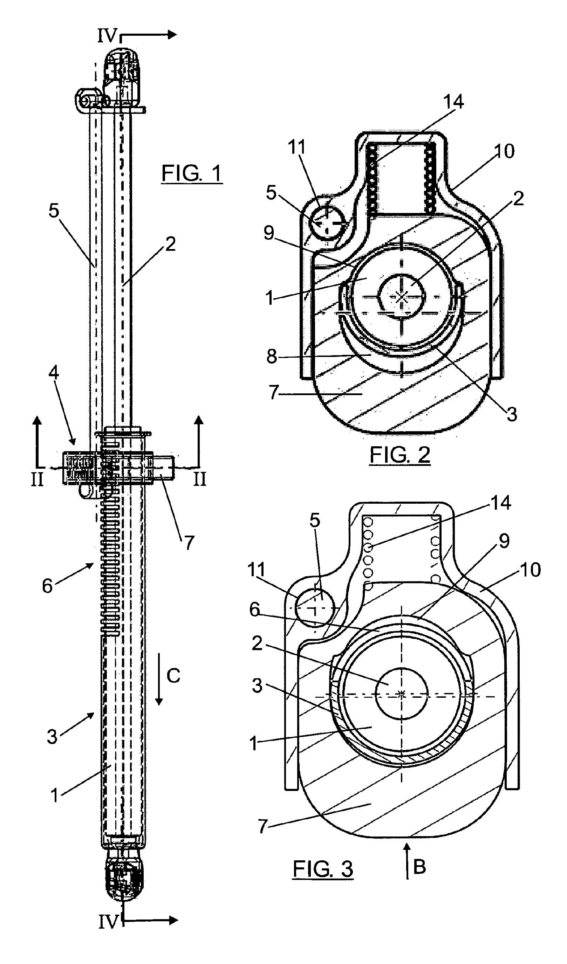

Figure 1 shows a spring according to the invention, which is formed by a cylindrical chamber 1 inside which there is housed a gas under pressure and a piston which can move therealong, the stem 2 of which projects coaxially through one of the bases of the chamber 1. Around this chamber there is arranged and fixed a sheath 3 covering it completely and on which there is transversely assembled a guide with general reference number 4 which can move along the sheath 3, at least in a section thereof, and be anchored on said sheath at the selected point. The spring of the invention is completed with a locking rod 5 which is parallel to stem 2 and is assembled between the free end of said stem and the guide 4, this rod 5 being movable with respect to the mentioned guide.

The wall of the sheath 3 has a transverse toothing 6, which can be obtained by means of transversely granulating the wall of this sheath for example and which is carried out at an amplitude equal to or greater than 180°.

As can better be seen in Figures 2, 3, 5 and 6, the guide 4 is formed by a hub 7 having an axial passage 8 that is larger than the outer cross-section of the cylindrical sheath 3. In the area opposite to the toothing 6 of the sheath, the passage 8 has a toothing 9 which is complementary to the toothing 6 of the sheath 3 so as to engage therewith. The guide 4 is completed with a yoke 10 assembled on the hub 1 with the ability of relative transverse sliding between both of them. The yoke 10 has a passage 11 through which the locking rod 5 passes.

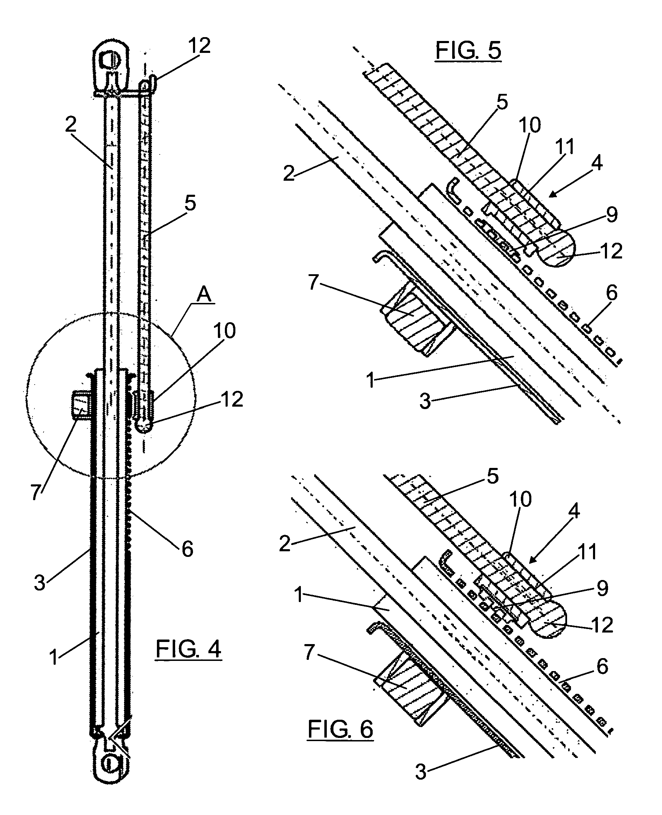

The hub 7 can move in a direction perpendicular to the axis of the spring, with respect to the yoke 10, between an engaging position with the toothing 6 of the sheath 3 as shown in Figures 2 and 5, in which the teeth 9 of the hub 7 are coupled between the teeth of the toothing 6 of the sheath, and a disengaging position, shown in Figures 3 and 5, in which the teeth 9 of the hub 7 are separated or uncoupled from the teeth of the toothing 6 of the sheath 3.

As can better be seen in Figure 4, the locking rod 5 is fixed at one end to the free end of the stem 2, by means of a flat bar 12 for example. At the opposite end, the rod 5 is finished in a head 13, Figures 5 and 6, preventing the separation of said rod with respect to the guide 4.

The hub 7 and the guide 10 are assembled such that they cannot be separated, allowing only the mentioned transverse movement, both components being driven constantly towards the engaging position of Figure 2 by means of a compression spring 14, Figures 2 and 3, assembled between both components.

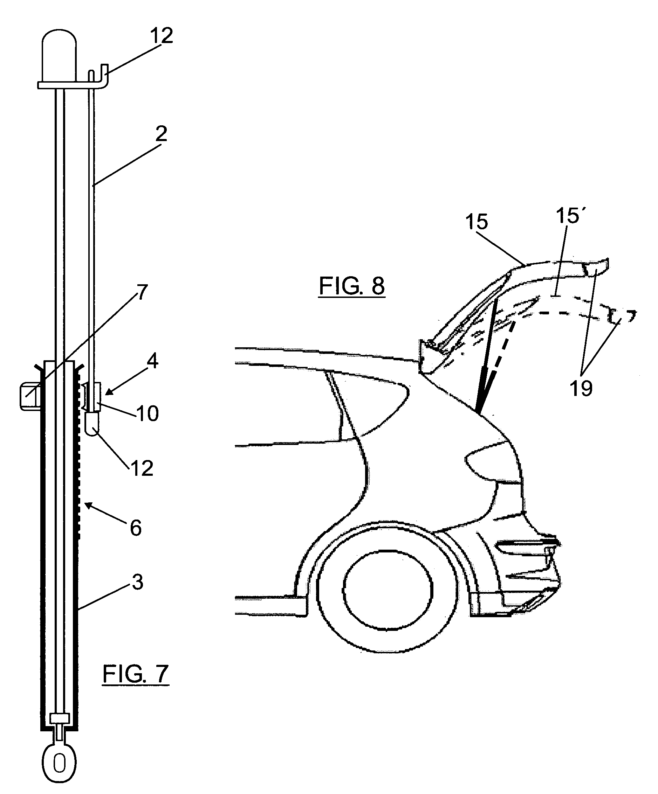

With the discussed constitution, when the guide 4 is in the situation shown in Figures 1 and 4, with the hub 7 in the locking position of Figures 2 and 5, the gas spring reaches its maximum run, defined by the maximum extraction or expansion of the stem 2 in the chamber 1. From this situation and with the spring in the compressed position, if the hub 7 is pressed in position B of Figure 3, said hub will move inside the yoke 10, compressing the spring 14, until the teeth 9 of hub 7 separate or uncouple from the toothing 6 of the cylindrical sheath 3, as shown in Figures 3 and 5. In this situation, guide 4 can be moved in direction C of Figure 1, until it is located in the position of Figure 7 for example. When the hub 7 is no longer being pressed, it again adopts the position of Figure 2, in which the teeth 9 of said hub again engage or couple with the toothing 6 of the cylindrical sheath 3, the guide being locked with respect to said sheath.

If the spring is expanded in this position of the guide 4, the exit of the stem 2 will be limited when the head 12 thereof is retained by the yoke 10, thus limiting the maximum expansion of the spring. This partial expansion position can be changed by simply acting on the guide 4 again as already described.

In this way and as can best be seen in Figure 8, the maximum opening of the rear hatch of a vehicle can be limited between a position with reference number 15, corresponding to the expansion of the spring in its total run shown in Figure 4, and a partial figure position with reference 15' corresponding to the partial expansion of the spring shown in Figure 7.

## Claims

1. An adjustable stroke gas spring, formed by a tight cylindrical chamber, in which there is housed a piston, the stem of which projects coaxially through one of the bases of the chamber, **characterized in that** it comprises a cylindrical sheath arranged and fixed around the wall of the chamber; a guide assembled transversely on said sheath, with the ability of sliding and anchoring therealong; and a locking rod parallel to the stem, which rod is assembled between the free end of said stem and the guide, with the ability of sliding with respect to said guide; the cylindrical sheath and guide of which have releasable mutual anchoring means along at least one section of the sheath for fixing the guide on the sheath in the selected position; and the rod of which is fixed at one end to the end of the stem and at the opposite end it is finished in a stop located outside the guide preventing the separation of said guide.

2. A spring according to claim 1, **characterized in that** the locking means between the guide and the sheath consist of complementary opposite transverse toothings extending in the guide and sheath by an amplitude equal to or less than 180°, and the guide can move transversely with respect to the sheath between an engaging or coupling position between the toothings of both components, and a separating or non-engaging position of said toothings, the guide being constantly driven towards the engaging position by means of a spring.

3. A spring according to claims 1 and 2, **characterized in that** the guide is formed by a hub which is assembled on the cylindrical sheath, with the ability of sliding therealong, and by a yoke which is externally assembled on the hub; the hub of which has at its inner surface a toothing which can be engaged with the toothing of the sheath and can move with respect to said sheath and yoke in a direction perpendicular to the axis of the cylindrical chamber by a magnitude that is greater than the height of the toothings, so as to reach the mentioned engaging and disengaging positions; and the yoke of which is assembled on the rod with the ability of sliding therealong and houses a spring assembled between said yoke and the hub, which spring drives said hub towards the engaging position.
